# EUROPÄISCHE PATENTSCHRIFT

(11) **EP 1 641 590 B1**
(45) Veröffentlichungstag und Bekanntmachung des Hinweises auf die Patenterteilung: **20.08.2008**
(21) Anmeldenummer: 04740564.2
(22) Anmeldetag: 02.07.2004
(51) Int. Cl.: B23K 20/10, H01R 43/02

(54) **SCHWEISSVORRICHTUNG SOWIE VERFAHREN ZUM VERSCHWEISSEN VON WERKSTÜCKEN**
WELDING DEVICE AND METHOD FOR WELDING WORKPIECES
DISPOSITIF DE SOUDAGE ET PROCEDE POUR SOUDER DES PIECES

(30) Priorität: 04.07.2003 DE 10330431
(43) Veröffentlichungstag der Anmeldung: 05.04.2006
(73) Patentinhaber: Schunk Sonosystems GmbH, 35435 Wettenberg (DE)
(72) Erfinder: DIETERLE, Horst, 35096 Niederweimar (DE); WAGNER, Peter, 35435 Wettenberg (DE)
(74) Vertreter: Stoffregen, Hans-Herbert
(86) Internationale Anmeldenummer: PCT/EP2004/007204
(87) Internationale Veröffentlichungsnummer: WO 2005/002778

(56) Entgegenhaltungen:
- US-A- 3 257 721
- US-A- 3 750 926
- US-A- 6 146 060

## Beschreibung

Die Erfindung bezieht sich auf eine Schweißvorrichtung, insbesondere Ultraschallschweißvorrichtung, umfassend mehrere kraftschlüssig verbundene über Kopplungsflächen aneinandergrenzende Elemente wie Sonotrode und Booster, Booster und Konverter, Sonotrode und Sonotrodenkopf oder Trag- und Arbeitsteile eines einen Verdichtungsraum begrenzenden mehrteiligen Ambosses, wobei einige der kraftschlüssig verbundenen Elemente in ihren aufeinander liegenden Kopplungsflächen zur Erzielung eines Formschlusses strukturiert sind.

Aus der DE-C-37 00 257 ist eine Ultraschallschweißvorrichtung mit einer Sonotrode bekannt, die über keilförmige Kopplungsflächen kontaktiert und mittels einer Schraubverbindung kraftschlüssig verbunden sind.

In der EP-B-0 761 370 wird eine Ultraschallschweißvorrichtung mit einer Sonotrode und diese am jeweiligen Ende begrenzenden Boostern beschrieben, die sich über Ringkreisflächen berühren. Eine kraftschlüssige Verbindung erfolgt über eine Schraube.

In DE.Z.: Ultraschall-Metallschweißen, Die Bibliothek der Technik, Band 108, Verlag Moderne Industrie, Landsberg/Lech, 1995, Seite 34, wird der Aufbau von Ultraschallschweißvorrichtungen erläutert. Dabei wird ausgeführt, dass die Kopplungsflächen zwischen Booster und Konverter bzw. Sonotrode eben und geläppt sein müssen, damit möglichst keine Verluste bei der Energieübertragung entstehen. Bei Nichtbeachtung kommt es zu unerwünschter Erwärmung, zu Geräuschentwicklung und eventueller Selbstschädigung.

Insbesondere bei mehrteiliger Sonotrode bzw. mehrteiligem Amboss müssen hohe Kräfte für den erforderlichen Kraftschluss erzeugt werden, um durch Einleiten von Querkräften auszuschließen, dass eine Geometrieveränderung erfolgt.

Dadurch, dass die Kopplungsflächen eben ausgebildet sind, ist es erforderlich, dass bei der Montage eine genaue Ausrichtung zwischen den Elementen erfolgt, um reproduzierbare Schweißergebnisse sicherzustellen.

Aus der US-A-6,299,052 ist ein Verfahren zum Verschweißen von elektrischen Leitern mittels Ultraschall bekannt, bei dem eine Ultraschallschweißvorrichtung mit in Höhe und Breite verstellbarem Verdichtungsraum zum Einsatz gelangt. Beim Einlegen der Leitern wird der Verdichtungsraum in seiner Breite stets derart eingestellt, dass die Leiter in Art einer Kolonne übereinander positioniert werden. Hierdurch bedingt erwächst der Nachteil, dass insbesondere dann, wenn eine große Anzahl von Leitern miteinander verschweißt werden sollen, das Einlegen aufwendig ist, so dass der zeitliche Abstand zwischen aufeinander folgenden Verschweißungen unerwünscht groß ist.

Ein Verfahren zum Kompaktieren und anschließenden Verschweißen von elektrischen Leitern ist der DE-A-44 29 684 zu entnehmen. Dabei wird ein Verdichtungsraum von einem Schieber begrenzt, der über Schrauben kraftschlüssig mit einem Basiselement verbunden ist.

Ebenfalls ein in Höhe und Breite verstellbarer Verdichtungsraum einer Ultraschallschweißvorrichtung ist aus der DE-A-195 40 860 bekannt. Dabei bestehen die den Verdichtungsraum begrenzenden Elemente wie Schieber und Amboss grundsätzlich aus mehreren Teilen, die untereinander über Schrauben kraftschlüssig verbunden sind.

Ein Hochfrequenzresonator nach der DE-A-38 07 154 wird über eine Schraubverbindung mit einem Booster oder Konverter verbunden.

Aus Tragteil und Arbeitsteil bestehende Begrenzungselemente eines Verdichtungsraums einer Ultraschallschweißvorrichtung sind aus dem DE-U-200 20 525 bekannt. Die Verbindung zwischen Tragteil und Arbeitsteil erfolgt über Schrauben.

Eine Schweißvorrichtung der eingangs genannten Art ist der US-A-3,257,721 zu entnehmen. Die Schweißvorrichtung weist einen Torsionsschwinger auf, der ein Torsionsrohr und einen Amplitudenwandler umfasst, die form- und kraftschlüssig miteinander verbunden sind.

Der vorliegenden Erfindung liegt das Problem zugrunde, eine Schweißvorrichtung der eingangs genannten Art derart auszubilden, dass einerseits eine hinreichend feste Verbindung zwischen den Elementen gegeben ist, gleichzeitig jedoch eine Vereinfachung in der Montage beim Zusammensetzen der Elemente erfolgt. Auch sollen eingeleitete Querkräfte problemlos aufgenommen werden können.

Erfindungsgemäß wird das Problem durch eine Schweißvorrichtung der eingangs genannten Art dadurch gelöst, dass eine Kopplungsfläche durch linienförmige Vorsprünge strukturiert ist und zuzuordnende Kopplungsfläche durch pyramiden-oder -stumpfförmige oder kegel- oder -stumpfförmige Vorsprünge und angrenzende Aussparungen strukturiert ist, wobei die Aussparungen geometrisch den Vorsprüngen der zuzuordnenden Kopplungsfläche entsprechen.

Abweichend vom vorbekannten Stand der Technik ist vorgesehen, dass die Kopplungs-oder Kontaktflächen zwischen den kraftschlüssig miteinander zu verbindenden Elementen einen Formschluss ermöglichen, wodurch beim Montieren eine Selbstzentrierung erfolgt. Gleichzeitig bietet der Formschluss den Vorteil, dass zum einen eine Kontaktflächenvergrößerung erfolgt und zum anderen Querkräfte aufgenommen werden können, so dass die für den Kraftschluss erforderlichen Kräfte im Vergleich zu bekannten Ultraschallschweißvorrichtungen reduziert werden können.

Dabei ist insbesondere vorgesehen, dass die linienförmigen Vorsprünge parallel zueinander verlaufen, wobei erste parallel zueinander verlaufen und zweite parallel zueinander verlaufende linienförmige Vorsprünge vorgesehen sein können, die sich vorzugsweise unter einem Winkel von 90° oder in etwa 90° schneiden.

Auch besteht die Möglichkeit, dass sich die linienförmigen Vorsprünge entlang konzentrisch verlaufender Kreise erstrecken.

In Weiterbildung der Erfindung ist vorgesehen, dass der y pyramiden y förmige oder kegel y förmige, y Vorsprung im Schnitt eine Dreiecksgeometrie, insbesondere die Geometrie eines gleichschenkligen Dreiecks aufweist. Dabei können die Schenkel einen Winkel α mit vorzugsweise in etwa 60° oder in etwa 90° einschließen. Aber auch eine trapezförmige Geometrie ist möglich, wobei deren Seitenschenkel ebenfalls einen Winkel α mit vorzugsweise in etwa 60° oder in etwa 90° einschließen sollten.

Andere geeignete Geometrien der Kopplungsfläche zur Erzielung des gewünschten Formschlusses sind gleichfalls möglich. So können die Vorsprünge im Schnitt eine Sägezahngeometrie oder eine wellenförmige Geometrie aufweisen, wobei ein sinusförmiger Verlauf bevorzugt ist.

Schneiden sich bevorzugterweise die Flanken der Vorsprünge in der Basis, so besteht nach einer Weiterbildung der Erfindung die Möglichkeit, dass die Vorsprünge durch parallel zur von der Kopplungsfläche aufgespannten Ebene verlaufende Abschnitte der Kopplungsfläche zueinander beabstandet sind.

Durch die erfindungsgemäße Ausbildung der Kopplungsflächen zur Erzielung eines Formschlusses ergibt sich der Vorteil, dass eine eindeutige Positionierung der zu verbindenden Elemente zueinander ermöglicht wird. Gleichzeitig können die zur Verbindung erforderlichen Kräfte, die über Verbindungselemente wie Schrauben eingeleitet werden, reduziert werden. Durch den Formschluss werden Querkräfte insbesondere beim Schweißen aufgenommen, wodurch eine Maßhaltigkeit zwischen den untereinander verbundenen Elementen sichergestellt ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnungen zu entnehmenden bevorzugten Ausführungsbeispielen.

Es zeigen:
- Fig. 1: eine Prinzipdarstellung von Elementen einer Ultraschallschweißvorrichtung zur Bildung eines Verdichtungsraums,
- Fig. 2: eine Prinzipdarstellung eines verstellbaren Ambosses mit angeschraubtem Arbeitsteil,
- Fig. 3: zwei miteinander verbundene Elemente einer Ultraschallschweißvorrichtung,
- Fig. 4: ein erstes Ausführungsbeispiel eines in seiner Kopplungsfläche strukturierten Elementes einer Ultraschallschweißvorrichtung,
- Fig. 5: die Kopplungsfläche gemäß Fig. 4 in Draufsicht,
- Fig. 6: eine zweite Ausführungsform eines eine strukturierte Kopplungsfläche aufweisenden Elementes,
- Fig. 7: die Kopplungsfläche gemäß Fig. 6 in Draufsicht,
- Fig. 8: eine dritte Ausführungsform eines eine strukturierte Kopplungsfläche aufweisenden Elementes,
- Fig. 9: die Kopplungsfläche gemäß Fig. 8 in Draufsicht,
- Fig. 10: eine erste Ausführungsform einer Kopplungsfläche im Ausschnitt,
- Fig. 11: eine zweite Ausführungsform einer Kopplungsfläche im Ausschnitt,
- Fig. 12: eine dritte Ausführungsform einer Kopplungsfläche im Ausschnitt,
- Fig. 13: eine vierte Ausführungsform einer Kopplungsfläche im Ausschnitt und
- Fig. 14: eine fünfte Ausführungsform einer Kopplungsfläche im Ausschnitt.

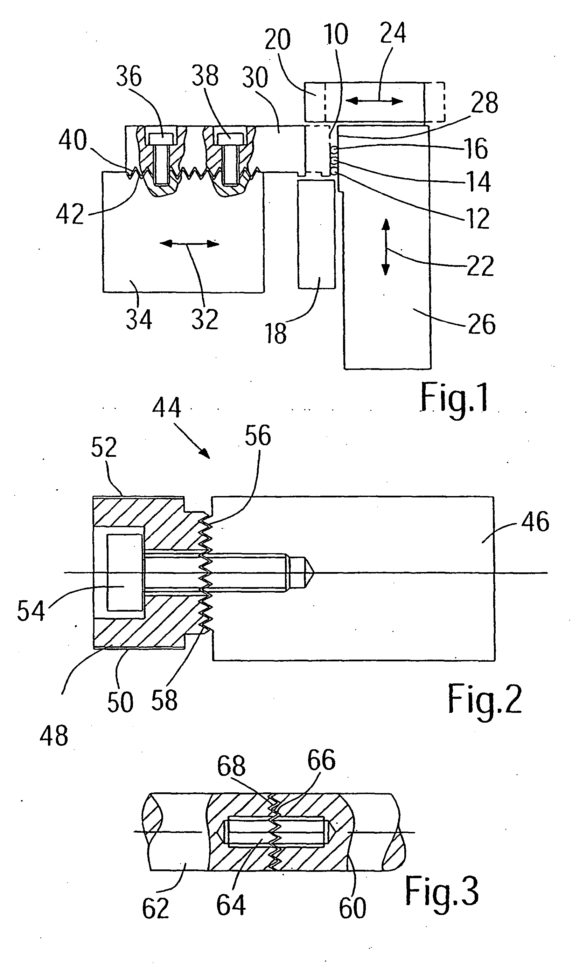

In Fig. 1 sind rein prinzipiell wesentliche einen Verdichtungsraum 10 begrenzende Elemente einer Ultraschallschweißvorrichtung dargestellt, um lang gestreckte litzenartige Werkstücke wie Leiter 12, 14, 16 zu kompaktieren und zu verschweißen. Der Verdichtungsraum 10 wird im Ausführungsbeispiel bodenseitig von einer Arbeitsfläche einer Sonotrode 18 begrenzt. Gegenüberliegend zur Sonotrode 18 ist ein Amboss 20 vorhanden, der an- und absenkbar (Doppelpfeil 22) sowie parallel zur Arbeitsfläche der Sonotrode 18 (Doppelpfeil 24) verschiebbar ist. Der Amboss 20 geht dabei von einem Träger oder einer Säule 26 aus, die mit einem Abschnitt 28 rechte seitliche Begrenzungsfläche des Verdichtungsraums 10 bildet. Gegenüberliegend ist ein Schieber 30 verstellbar (Doppelpfeil 32) angeordnet, der von einem Träger 34 ausgeht. Durch Verstellen des Schiebers 30 bzw. Trägers 34 kann der Verdichtungsraum 10 in seiner Breite eingestellt werden. Entsprechend der Breite des Verdichtungsraums 10 wird automatisch die der Arbeitsfläche der Sonotrode 18 gegenüberliegende Arbeitsfläche des Ambosses 20 eingestellt. Die Höhe des auf den Gesamtquerschnitt der Werkstücke 14, 16 auszurichtenden Verdichtungsraums 10 kann durch Verschieben der Säule bzw. des Trägers 26 des Ambosses 20 eingestellt werden.

Wie die Fig. 1 des Weiteren verdeutlicht, ist der Schieber 30 mit dem Träger 34 über Schrauben 36, 38 kraftschlüssig verbunden. Ferner sind die Kopplungsflächen 40, 42 vom Schieber 30 und Träger 34 derart strukturiert, dass sich zusätzlich ein Formschluss ergibt.

Aber nicht nur zwischen dem Schieber 30 und dem Träger 34 kann eine kraft- und formschlüssige Verbindung hergestellt werden, sondern grundsätzlich zwischen sämtlichen zu verbindenden Elementen der Ultraschallschweißvorrichtung, insbesondere solchen, die schweißbedingten Kräften ausgesetzt sind. So ist in Fig. 2 eine Prinzipdarstellung eines Ambosses 44 bzw. Ambossschiebers dargestellt, der aus einem quaderförmigen Basiskörper 46 und einem Arbeitsteil 48 zusammengesetzt ist, das seinerseits vorzugsweise auf gegenüberliegenden Seiten Arbeitsfläche 50, 52 aufweist, von denen eine entsprechend den Erläuterungen der Fig. 1 Begrenzungsfläche eines Verdichtungsraums bildet.

Der Basiskörper 46 ist mit dem Arbeitsteil 48 über eine Schraube 54 kraftschlüssig verbunden. Um zusätzlich einen Formschluss zu erzielen, sind sowohl von dem Basiskörper 46 als auch von dem Amboss deren Kopplungsflächen 56, 58 strukturiert. Entsprechend kann eine Sonotrode mit eine oder mehrere Arbeitsflächen aufweisendem Sonotrodenkopf ausgebildet sein. Auch besteht die Möglichkeit, mehrere Arbeitsteile, die jeweils die Funktion eines Sonotrodenkopfes ausüben, mit dem Basiskörper der Sonotrode entsprechend der erfindungsgemäßen Lehre zu verbinden.

In Fig. 3 sind Abschnitte zum Beispiel eines Boosters 60 und eines Sonotrodenbasiskörpers 62 dargestellt, die über einen Bolzen 64 kraftschlüssig verbunden sind. Ferner sind die aufeinander liegenden Kopplungsflächen 66, 68 derart strukturiert, dass ein gezielter Formschluss gegeben ist. Durch diese Maßnahmen werden die Kopplungsflächen vergrößert, eine Selbstzentrierung der zu verbindenden Elemente 60, 62 erreicht sowie einwirkende Querkräfte abgefangen.

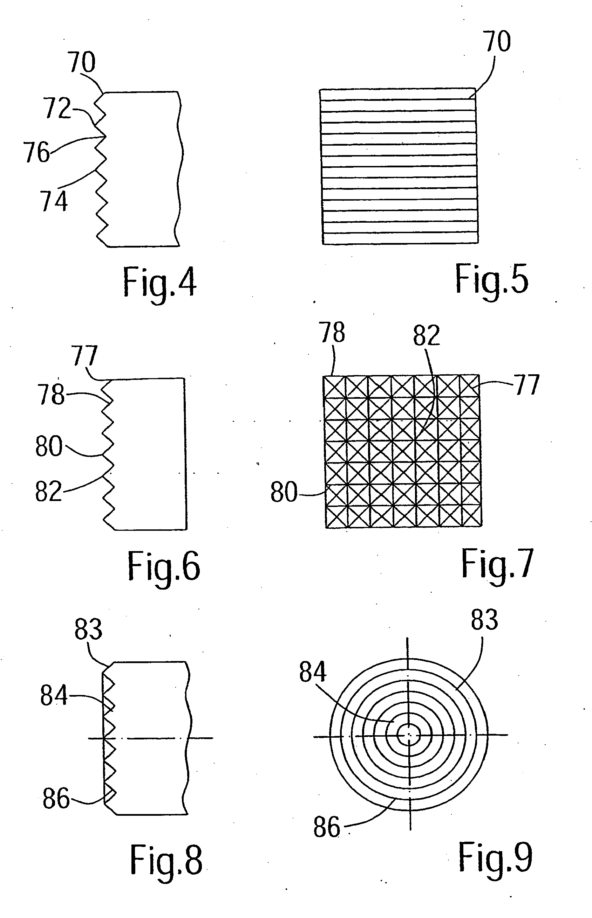

Die gezielt für einen Formschluss ausgebildete Strukturierung der Kopplungsflächen 40, 42, 56, 58 bzw. 66, 68 kann durch eine gewünschte Oberflächengeometrieausbildung erzielt werden. Beispiele sind den Fig. 4 - 14 zu entnehmen. So kann eine Kopplungsfläche 70 parallel zueinander verlaufende Erhebungen 72, 74 aufweisen, die durch entsprechende Gräben 76 voneinander getrennt sind. Sind die aufeinander liegenden Kopplungsflächen gleich ausgebildet, so zeigt der Graben eine Geometrie, die kongruent zu dem Vorsprung 72 ist, so dass folglich eine zuzuordnende Kopplungsfläche eine der Fläche 70 entsprechende Geometrie aufweist.

Hierbei sind die aufeinander liegenden Kopplungsflächen unterschiedlich strukturiert, wobei jedoch eine Ergänzung der Strukturen derart gegeben sein muss, dass der gewünschte erzielte Formschluss erreichbar ist.

Sind im Ausführungsbeispiel der Fig. 4 und 5 die linienförmigen Erhebungen 74, 76 ausschließlich parallel zueinander verlaufend angeordnet, so besteht nach dem Ausführungsbeispiel der Fig. 6 und 7 die Möglichkeit, dass Erhebungen 78, 80, 82 einer Kopplungsfläche 77 kreuzend zueinander angeordnet sind, wie die Prinzipdarstellung insbesondere der Fig. 7 verdeutlichen soll.

Aber auch eine konzentrische Anordnung von linienförmigen Erhebungen 84, 86 in einer Kopplungsfläche 83 ist möglich, wie die Fig. 8 und 9 prinzipiell vermitteln sollen.

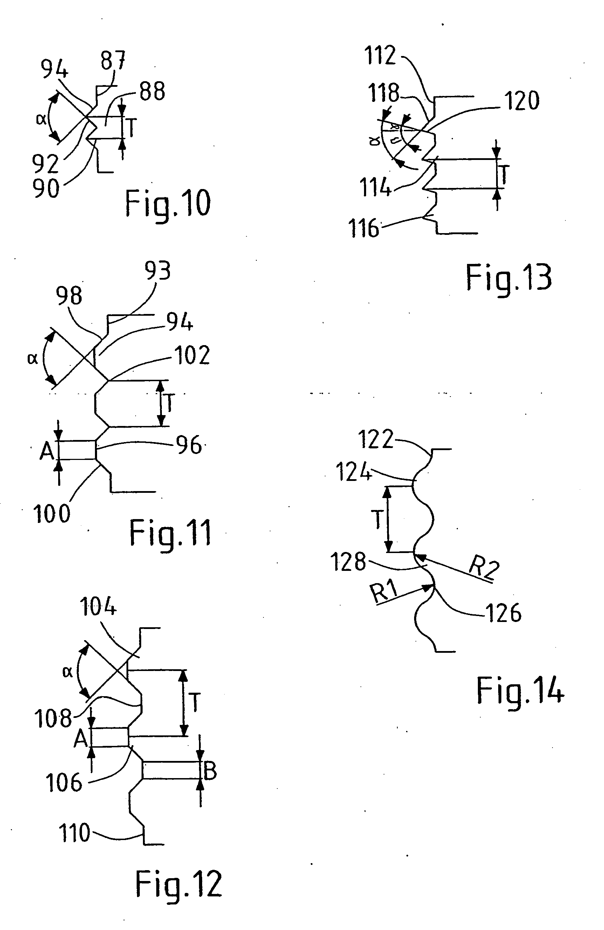

Den Fig. 10 - 14 sind bevorzugte Querschnittsgeometrien der vorzugsweise linienförmigen Erhebungen von Kopplungsflächen zu entnehmen. Anzumerken ist jedoch, dass nicht zwingend linienförmige Erhebungen zur Strukturierung und zur Erzielung des Formschlusses notwendig sind. Vielmehr können auch pyramiden- bzw. pyramidenstumpfförmige oder kegel- bzw. kegelstumpfförmige Erhebungen und entsprechend angrenzende Vertiefungen zur Ausbildung der Struktur vorgesehen sein.

Nach dem Ausführungsbeispiel der Fig. 10 weisen Erhebungen 88, 90 einer Kopplungsfläche 87 im Schnitt eine Geometrie eines gleichschenkligen Dreiecks auf, wobei dessen Schenkel 92, 94 einen Winkel α einschließen, der zum Beispiel 60° oder 90° oder in etwa 60° oder 90° betragen kann. Der Abstand zwischen den Erhebungen 88, 90 zwischen Spitze und Spitze ist in Fig. 10 mit "T" gekennzeichnet und beläuft sich vorzugsweise im Bereich von 0,5 mm bis 5 mm. Die Höhe des Vorsprungs 88, 90 kann sich belaufen auf zwischen 0,5 mm und 2,5 mm.

Nach der Fig. 11 weisen eine Struktur einer Kopplungsfläche 93 bildende Vorsprünge 94, 96 im Schnitt eine Trapezgeometrie auf, wobei Seitenschenkel 98, 100 einen Winkel α von zum Beispiel 60° oder 90° einschließen können. Die Erhebungen gehen bodenseitig ineinander über, so dass diese durch V-förmige Rinnen 102 begrenzt sind. Der Abstand T zwischen den Vorsprüngen beläuft sich vorzugsweise zwischen 0,5 mm und 5 mm. Die Höhe liegt insbesondere zwischen 0,5 mm und 2,5 mm.

Eine ebenfalls im Schnitt trapezförmige Geometrie weist Vorsprünge 104, 106 einer Kopplungsfläche 110 nach der Fig. 12 auf. Die Vorsprünge 104, 106 sind dabei durch plane Bodenabschnitte 108 begrenzt, die parallel zur von der Kopplungsfläche 110 aufgespannten Ebene verlaufen bzw. Abschnitte dieser sind.

Der Abstand zwischen den Vorsprüngen 104, 106 beträgt vorzugsweise zwischen 0,7 mm und 6 mm. Die Vorsprünge 104, 106 weisen des Weiteren eine plateauartige ebene Außenfläche einer Breite A zwischen 0,1 mm und 3 mm auf. Die Bodenabschnitte 108 weisen ihrerseits eine Breite B zwischen 0,1 mm und 3 mm auf. Dabei sollte die Struktur so ausgelegt sein, dass die Breiten A und B jeweils kleiner als der Abstand T ist. Die Höhe der Vorsprünge 104, 106 kann sich belaufen zwischen 0,5 mm und 2,5 mm.

Nach der Fig. 13 kann eine Kopplungsfläche 112 eine sägezahnartige Struktur durch ungleichschenkligen Dreiecken folgende Vorsprünge 114, 116 mit einem Abstand T zwischen 0,5 mm und 5 mm aufweisen. Die Vorsprünge 114, 116 weisen Schenkel 118, 120 auf, die einen Winkel α vorzugsweise mit 45° ≤ α ≤ 75° einschließen. Der Schenkel 118 weist zur Normalen der Kopplungsfläche 112 einen Winkel γ vorzugsweise mit 15° ≤ γ ≤ 45° und der Schenkel 120 zur Normalen einen Winkel β vorzugsweise mit 15° ≤ β ≤ 45° auf. Der Abstand T zwischen den Vorsprüngen 114, 116 beläuft sich auf 0,5 mm ≤ T ≤ 5 mm. Die Höhe kann gewählt werden zwischen 0,5 mm und 2,5 mm .

Aber auch eine wellenförmige Geometrie einer Kopplungsfläche 122 ist entsprechend der Fig. 14 möglich, um den gewünschten Formschluss zwischen aufeinander liegenden Kopplungsflächen zu erzielen. Die wellenförmige Geometrie folgt dabei vorzugsweise einem Sinusverlauf, wobei allerdings die Krümmungsradien R₁, R₂ der Vorsprünge 122 bzw. Senken oder Täler 124 voneinander abweichen können. Der Abstand zwischen aufeinander folgenden Vorsprüngen 124, 128 kann zwischen 0,5 mm ≤ T ≤ 5 mm betragen.

Um Leiter unabhängig von deren Anzahl optimal zu verschweißen, sieht ein eigenerfinderischer Vorschlag vor, dass entsprechend der Anzahl der Leiter 12, 14, 16 der Verdichtungsraum 10 beim Einlegen der Werkstücke 12, 14, 16 auf eine vorgegebene Breite eingestellt wird, die anschließend einen optimalen Schweißvorgang ermöglicht. So sollte dann, wenn zwei oder drei Leiter miteinander verschweißt werden, der Verdichtungsraum 10 auf eine Breite eingestellt werden, die sicherstellt, dass die Leiter in einer Kolonne übereinander in dem Verdichtungsraum 10 angeordnet werden, wie durch die Fig. 1 und die gestrichelte Darstellung des Schiebers 30 angedeutet wird. Beim Einlegen der Werkstücke 12, 14, 16 ist der Amboss 20 nach rechts verschoben, um den Verdichtungsraum 10 von oben freizugeben (gestrichelte Darstellung des Ambosses 20).

Sollen dagegen mehr als vier Werkstücke miteinander verschweißt werden, so wird der Verdichtungsraum 10 optimal zum Einlegen der Werkstücke geöffnet (durchgezogene Darstellung). Die Breite wird in diesem Fall durch die maximale von der Sonotrode 10 zur Verfügung gestellten Begrenzungsfläche des Verdichtungsraums 10 vorgegeben. Nachdem die Leiter in einen entsprechend weit geöffneten Verdichtungsraum 10 eingelegt worden sind, wird der Schieber 30 in Richtung des Trägers bzw. der Säule 26 verschoben. Sodann wird der Amboss 20 in Richtung der Sonotrode 18 abgesenkt. Gleichzeitig erfolgt eine Erregung der Sonotrode 18, um das Verschweißen durchzuführen.

## Patentansprüche

1. Schweißvorrichtung, insbesondere Ultraschallschweißvorrichtung, umfassend mehrere kraftschlüssig verbundene über Kopplungsflächen (40, 42, 56, 58, 66, 68) aneinandergrenzende Elemente wie Sonotrode (18) und Booster (60), Booster und Konverter, Sonotrode und Sonotrodenkopf oder Arbeitsteile eines einen Verdichtungsraum (10) begrenzenden mehrteiligen Ambosses, wobei einige der kraftschlüssig verbundenen Elemente (30, 34, 46, 48, 60, 62) in ihren aufeinander liegenden Kopplungsflächen zur Erzielung eines Formschlusses strukturiert sind,
**dadurch gekennzeichnet,**
**dass** eine Kopplungsfläche (70, 77, 83) durch linienförmige Vorsprünge (72, 74, 78, 80, 84, 86) strukturiert ist und zuzuordnende Kopplungsfläche durch pyramiden- oder pyramidenstumpfförmige oder kegel- oder kegelstumpfförmige Vorsprünge (88, 90) und angrenzende Aussparungen strukturiert ist, wobei die Aussparungen geometrisch den Vorsprüngen der zuzuordnenden Kopplungsfläche entsprechen.

2. Schweißvorrichtung nach Anspruch 1,
**dadurch gekennzeichnet,**
**dass** die linienförmigen Vorsprünge (72, 74, 78, 80; 82) parallel zueinander verlaufen.

3. Schweißvorrichtung nach Anspruch 1,
**dadurch gekennzeichnet,**
**dass** die Kopplungsfläche (77) erste und zweite parallel zueinander verlaufende linienförmige Vorsprünge (78, 80, 82) aufweist, wobei sich die ersten und die zweiten linienförmigen Vorsprünge vorzugsweise unter einem Winkel von 90° schneiden.

4. Schweißvorrichtung nach Anspruch 1,
**dadurch gekennzeichnet,**
**dass** sich die linienförmigen Vorsprünge (84, 86) entlang konzentrisch verlaufen-der Kreise erstrecken.

5. Schweißvorrichtung nach Anspruch 1,
**dadurch gekennzeichnet,**
**dass** der y pyramiden y förmige oder kegel y förmige Vorsprung (88, 90) im y Schnitt eine Dreiecksgeometrie, vorzugsweise die eines gleichschenkligen Dreiecks aufweist.

6. Schweißvorrichtung nach Anspruch 5,
**dadurch gekennzeichnet,**
**dass** die im Schnitt eine Dreiecksgeometrie aufweisenden Vorsprünge (88, 90) in Bezug auf ihre Schenkel (92, 94) einen Winkel α mit vorzugsweise α = 60° oder α = 90° einschließen.

7. Schweißvorrichtung nach zumindest Anspruch 1,
**dadurch gekennzeichnet,**
**dass** die Vorsprünge im Schnitt eine Geometrie eines Trapezes aufweisen, wobei Seitenschenkel einen Winkel α mit vorzugsweise α = 60° oder α = 90° einschließen.

8. Schweißvorrichtung nach zumindest Anspruch 1,
**dadurch gekennzeichnet,**
**dass** die Kopplungsfläche (40, 42, 56, 58, 66, 68) durch Vorsprünge (114, 116) strukturiert ist, die im Schnitt einer Sägezahngeometrie folgen.

9. Schweißvorrichtung nach zumindest Anspruch 1,
**dadurch gekennzeichnet,**
**dass** die Kopplungsfläche (40, 42, 56, 58, 66, 68) durch Vorsprünge (124, 128) strukturiert ist, die eine wellenförmige Geometrie aufweisen.

10. Schweißvorrichtung nach zumindest Anspruch 9,
**dadurch gekennzeichnet,**
**dass** die Vorsprünge (124, 128) im Schnitt einem sinusförmigen Verlauf folgen.

## Claims

1. Welding device, in particular an ultrasonic welding device, comprising several adjacent elements, force-fittingly connected via coupling surfaces(40, 42, 56, 58, 66, 68), such sonotrode (16) and booster (60), booster and converter, sonotrode and sonotrode head or working parts of a multipart anvil limiting a compression chamber (10), whereby some of the force-fittingly connected elements (30, 34, 46, 48, 60, 62) are structured in their coupling surfaces, which lie on each other, for achieving a form-fitting connection,
**characterized in**
**that** one coupling surface (70, 77, 83) is structured by linear-shaped projections (72, 74, 78, 80, 84, 86) and coupling surface to be allocated is structured by pyramidal or pyramidal truncated or conical or conical truncated projections (88, 90) and adjacent recesses, whereby the recesses correspond in their geometry to the projections of the coupling surface to be allocated.

2. Welding device according to claim 1,
**characterized in**
**that** the linear-shaped projections (72, 74, 78, 80; 82) run parallel to each other.

3. Welding device according to claim 1,
**characterized in**
**that** the coupling surface (77) exhibits first and second linear-shaped projections (78, 80, 82) that run parallel to each other, whereby the first and second linear-shaped projections intersect preferably at a angle of 90°.

4. Welding device according to claim 1,
**characterized in**
**that** the linear-shaped projections (84, 86) extend along concentrically-running circles.

5. Welding device according to claim 1,
**characterized in**
**that** in cross section the pyramidal or conical projection (88, 90) exhibits a triangle geometry, preferably isosceles triangle geometry.

6. Welding device according to claim 5,
**characterized in**
**that** the projections (88, 90) having a triangle geometry in section enclose with respect to their legs (92, 94) an angle α preferably of α = 60° or α = 90°.

7. Welding device according to at least claim 1,
**characterized in**
**that** in section the coupling surfaces have a geometry of a trapezoid, whereby side legs enclose an angle α preferably of α = 60° or α = 90°.

8. Welding device according to at least claim 1,
**characterized in**
**that** the coupling surface (40, 42, 56, 58, 66, 68) is structured by projections (114, 116), which in section follow a saw-tooth geometry.

9. Welding device according to at least claim 1,
**characterized in**
**that** the coupling surface (40, 42, 56, 58, 66, 68) is structured by projections (124, 128), which exhibit a waved geometry.

10. Welding device according to at least claim 9,
**characterized in**
**that** in section the projections (124, 128) follow a sinusoidal course.

11. Welding device according to at least claim 1,
**characterized in**
**that** the coupling surface (40, 42, 56, 58, 66, 68) is structured by projections (104, 106), which are delimited by plane bottom sections (108) running parallel to the plane defined by the coupling surface (110, 112) and being sections of it, respectively.

## Revendications

1. Appareil de soudage, en particulier appareil de soudage à ultrasons, comprenant plusieurs éléments contigus reliés à force par des surfaces de couplage (40, 42, 56, 58, 66, 68), tels que sonotrode (18) et booster (60), booster et convertisseur, sonotrode et tête de sonotrode ou des pièces actives d'une enclume en plusieurs parties limitant une chambre de compression (10), sachant que, dans leurs surfaces de couplage superposées, certains des éléments reliés à force (30, 34, 46, 48, 60, 62) sont structurés de manière à obtenir un serrage géométrique
**caractérisé en ce**
**qu'**une surface de couplage (70, 77, 83) est structurée par des portées linéaires (72, 74, 78, 80, 84, 86) et que la surface de couplage associée est structurée par des portées (88, 90) en forme de pyramide ou de pyramide tronquée ou de cône ou de cône tronqué et par des évidements adjacents, sachant que les évidements correspondent géométriquement aux portées de la surface de couplage associée.

2. Appareil de soudage selon la revendication 1,
**caractérisé en ce**
**que** les portées linéaires (72, 74, 78, 80, 82) sont parallèles entre elles.

3. Appareil de soudage selon la revendication 1,
**caractérisé en ce**
**que** la surface de couplage (77) présente des premières et des secondes portées linéaires (78, 80, 82) parallèles entre elles, sachant que les premières et les secondes portées linéaires se coupent de préférence sous un angle de 90°.

4. Appareil de soudage selon la revendication 1,
**caractérisé en ce**
**que** les portées linaires (84, 86) s'étendent le long de cercles concentriques.

5. Appareil de soudage selon la revendication 1,
**caractérisé en ce**
**que** la portée (88, 90) en forme de pyramide ou de cône présente une section ayant une géométrie triangulaire, de préférence celle d'un triangle isocèle.

6. Appareil de soudage selon la revendication 5,
**caractérisé en ce**
**que** les portées (88, 90) présentant en coupe une géométrie triangulaire inscrivent un angle α, avec de préférence α = 60° ou α = 90°, par rapport à leurs côtés (92, 94).

7. Appareil de soudage selon au moins la revendication 1,
**caractérisé en ce**
**que** les portées présentent en coupe la géométrie d'un trapèze, sachant que les côtés latéraux inscrivent un angle α, avec de préférence α = 60° ou α = 90°.

8. Appareil de soudage selon au moins la revendication 1,
**caractérisé en ce**
**que** les surfaces de couplage (40, 42, 56, 58, 66, 68) sont structurées par des portées (114, 116) qui présentent en coupe une géométrie en dent de scie.

9. Appareil de soudage selon au moins la revendication 1,
**caractérisé en ce**
**que** les surfaces de couplage (40, 42, 56, 58, 66, 68) sont structurées par des portées (124, 128) qui présentent une géométrie ondulée.

10. Appareil de soudage selon au moins la revendication 9,
**caractérisé en ce**
**que** les portées (124, 128) ont en coupe un profil sinusoïdal.

11. Appareil de soudage selon au moins la revendication 1,
**caractérisé en ce**
**que** les surfaces de couplage (40, 42, 56, 58, 66, 68) sont structurées par des portées (104, 106) limitées par des sections de fond planes (108) qui s'étendent parallèlement au plan défini par les surfaces de couplage (110, 112) ou sont des sections de celui-ci.
